# EUROPÄISCHE PATENTSCHRIFT

(11) **EP 0 635 085 B1**
(45) Veröffentlichungstag und Bekanntmachung des Hinweises auf die Patenterteilung: **06.12.1995**
(21) Anmeldenummer: 93906368.1
(22) Anmeldetag: 31.03.1993
(51) Int. Cl.: E03F 5/10, B01D 21/18, B65G 23/06

(54) **KETTENFÖRDERER ODER -RÄUMER, INSBESONDERE FÜR ABWASSERANLAGEN**
CHAIN CONVEYOR OR SCRAPER, IN PARTICULAR FOR SEWAGE INSTALLATIONS
CONVOYEUR OU RACLEUR A CHAINE, NOTAMMENT POUR EGOUTS

(30) Priorität: 01.04.1992 AT 659/92
(43) Veröffentlichungstag der Anmeldung: 25.01.1995
(73) Patentinhaber: SENOVA KUNSTSTOFFE GESELLSCHAFT M.B.H., A-5721 Piesendorf (AT)
(72) Erfinder: WILHELM, Günter, A-5020 Salzburg (AT)
(74) Vertreter: Hübscher, Heiner, Dipl.-Ing.
(86) Internationale Anmeldenummer: AT9300059
(87) Internationale Veröffentlichungsnummer: WO9320294

(56) Entgegenhaltungen:
- EP-A- 0 198 334
- EP-A- 0 459 301
- FR-E- 38 686
- US-A- 4 950 398

## Beschreibung

Die Erfindung betrifft einen Kettenförderer oder -räumer, insbesondere für Abwasseranlagen, mit wenigstens einer großgliedrigen Kette, die über Kettenräder geführt ist, von denen wenigstens eines antreibbar ist, wobei die Kettenglieder und die mit ihnen in Eingriff kommenden Teile der Kettenräder als Kunststoffteile ausgebildet sind, die untereinander gleichen Kettenglieder gabelartige Grundform aufweisen, mit einer die Kettenstege an der Basis verbindenden Buchse zwischen die Stegenden des nächstfolgenden Gliedes eingreifen und mit diesem über durch die Buchse und die Stegenden durchsetzende Kettenbolzen verbunden sind, wobei in die Kette integrierbare Förder- oder Räumelemente vorgesehen sind, und die Kettenräder für den Eingriff mit den Buchsen bestimmte Zähne aufweisen.

Ein derartiger Kettenräumer ist aus der US-A-4 950 398 bekannt.

Kettenräumer werden unter anderem als Bodenräumer in Klärbecken und anderen Absetzbecken verwendet, wobei sie dazu dienen, die sich absetzenden Festteile über die Beckenlänge zu einer Austragrinne oder einer anderen Austragvorrichtung zu fördern. Die Anzahl der angetriebenen Kettenräder richtet sich nach der zu erwartenden Zugbelastung, der Arbeitslänge des Räumers und nach der jeweiligen Gesamtkonzeption. Durch die Verwendung von Kunststoffen für die Herstellung der Kettenräder und der Kettenglieder soll eine hohe Korrosionssicherheit und damit eine geringe Wartungsanfälligkeit erzielt werden. Es gibt Räumer und Förderer mit einer Mittelkette, von der nach beiden Seiten Förder- oder Räumelemente vorragen. Bevorzugt werden aber auch nach der US-A-4 950 398 Doppelkettenförderer bzw. -räumer mit zwei parallelen, endlosen Ketten, die abstandsweise über die Förder- bzw. Räumelemente verbunden sind. Bei den bekannten Förderern und Räumern stellen die Kettenräder häufig einteilig gefertigte zahnradartige Bauteile dar, die ausschließlich an den Außenseiten der die Kettenstege an der Basis verbindenden Buchsen angreifen. Beim Betrieb kommt es häufig zu einem Seitenversatz der Ketten, z. B. unter unsymmetrischer Belastung der Förder- oder Räumelemente und damit zu einem seitlich-schrägen Einlauf der Ketten in die Kettenräder, wodurch ein erhöhter Verschleiß sowohl der Buchsen als auch der Kettenradzähne auftritt und auch die Gesamtfunktion des Förderers bzw. Räumers beeinträchtigt wird. Bei Bruch eines Zahnes des Kettenrades muß das gesamte Kettenrad ausgewechselt werden, wobei sich beträchtliche Betriebsunterbrechungen ergeben können. Die Räumer- oder Förderelemente werden vorzugsweise als Sonderbauteile ausgeführt, bei denen zumindest die Halterung an gesondert gefertigten Elementen angebracht ist, die die Länge von Kettengliedern aufweisen und nach einer bekannten Ausführung ein Glied in der Kette ersetzen und über die Kettenbolzen mit den nächstfolgenden Kettengliedern verbunden werden. Dabei liegen die Anbringungsstellen der Räum- und Förderelemente an der Kette von Haus aus fest und bei auftretenden Schäden muß das gesamte Anbringungselement unter Unterbrechung des Kettenverlaufes ausgewechselt werden.

Zur Schonung der Kette sowie zur Erzielung einer besseren Stabilität ist es deshalb nach der US-A-4 950 398 vorgesehen, winkelförmige Halterungen für die Räum-und Förderelemente zu verwenden, bei denen ein Schenkel die Länge eines Kettengliedes besitzt, wobei diese Halterungen mit diesem Schenkel an verlängerten Kettenbolzen links und rechts auf je einem Kettenglied befestigt werden.

Aufgabe der Erfindung ist es, einen Kettenförderer oder -räumer der eingangs genannten Art zu schaffen, bei dem die Kettenführung verbessert wird, die Förderkräfte auf größere Bereiche unter Herabsetzung der Flächenpressung verteilt werden, ein ruhigerer Kettenlauf erzielbar ist und bei auftretenden Beschädigungen eine raschere Reperatur als bisher unter geringerem Materialeinsatz ermöglicht wird.

Die gestellte Aufgabe wird erfindungsgemäß dadurch gelöst, daß die Kettenräder zusätzlich zu den für den Eingriff mit den Buchsen bestimmten Mittelzähnen beidseits weitere, an den Stegaußenseiten der Ketten angeordnete Außenzähne für den Eingriff mit herausgeführten Kettenbolzenenden oder an diesen angebrachten Mitnehmern aufweisen, wobei die Kettenglieder sich beim Durchlauf mit ihren Stegen zwangsweise in den zwischen Mittelzähnen und Außenzähnen gebildeten Durchtrittsspalten oder Schlitzen ausrichten.

Durch die erfindungsgemäße Ausführung wird die Führung der Kettenglieder an den Kettenrädern wesentlich verbessert. Die aufzubringenden Antriebskräfte werden auf alle drei Zähne des Kettenrades und auf Buchse und Kettenbolzenenden bzw. Mitnehmer verteilt, so daß geringere Anpreßkräfte auftreten und sich dadurch der Verschleiß, der wegen des gesichterten geradlinigen Einlaufes der Kette in die Kettenräder ohnehin gering ist, weiter verringert.

Wenn in Weiterbildung der Erfindung in den zwischen den Außenzähnen und den Mittelzähnen vorgesehenen Durchtrittsspalten für die Kettenstege am Spaltgrund Abwälz- und Leitflächen für die Ränder der Stege der Kettenglieder vorgesehen sind, dann wird an umlenkenden Kettenrädern ein Teil der Kettenkräfte von diesen Abwälz- und Leitflächen aufgenommen und durch entsprechende Formgebung dieser Flächen kann bei Verringerung des Kettenraddurchmessers trotzdem ein ruhiger Ein- und Ablauf der Kette gewährleistet werden. Überdies kann man durch entsprechende Form der Leitflächen das Abwerfen der Kette von den Zähnen beeinflussen.

Im einfachsten Fall greifen die Außenzähne unmittelbar an den Kettenbolzen an. Bevorzugt wird aber eine Ausgestaltung, bei der die Außenzähne und der Mittelzahn gleiche Grundform aufweisen können. Um dies zu erreichen, müssen die Kettenbolzen in dem für den Eingriff mit den Außenzähnen bestimmten Bereich auf den Durchmesser der Buchse verdickt werden. Dies wird bevorzugt durch Mitnehmer erreicht, die auch gleichzeitig die beiderseitigen Buchsenöffnungen abdecken und den Kettenbolzen sichern können.

Nach einer möglichen Ausführung sind die auf den Kettenbolzen angebrachten Mitnehmer mit den Kettenbolzen in den Buchsen drehbar gelagert, so daß bei der Umlenkung der Kette der Kettenbolzen mit den Mitnehmern im wesentlichen keine Relativverdrehung gegenüber den Kettenzähnen auszuführen hat.

Nach einer anderen Variante sind die auf den Kettenbolzen angebrachten Mitnehmer als auf den Kettenbolzen drehbare Walzen ausgebildet.

Eine kostengünstige Bauweise und geringe Reparaturkosten bei auftretenden Fehlern werden erreicht, wenn in Weiterbildung der Erfindung, die Zähne des Kettenrades als gesonderte, auf einer Trägerscheibe befestigte Bauteile ausgebildet sind. Dabei können schadhafte Bauteile für sich ausgewechselt werden und es ist möglich, gleiche Bauteile für Kettenräder unterschiedlichen Durchmessers und unterschiedlicher Zahnzahl zu verwenden. Überdies kann die Trägerscheibe aus einem billigeren Material hergestellt werden, so daß sich insgesamt wesentlich verringerte Herstellungskosten ergeben.

Eine bevorzugte Ausführungsform besteht hier darin, daß jeder Bauteil einen Mittelzahn, die zugeordneten Außenzähne mit den Führungen für die Kettenstege und an der von den Zähnen abweisenden Seite eine Aufnahmenut für den Rand der Trägerscheibe aufweist. Dabei kann die Trägerscheibe im Anbringungsbereich der die Zähne aufweisenden Bauteile eine von der Kreisform abweichende Umrißform zur Bildung von Abstützflächen für diese Bauteile insbesondere für den Nutgrund der Aufnahmenut besitzen, so daß auch eine formschlüssige Übertragung der Kräfte von den Zähnen auf die Scheibe gewährleistet ist.

Wenigstens ein Teil der Kettenglieder kann im Längsmittelbereich der Kettenstege Führungs-und Stützflächen für die Anbringung eines Haltebockes eines Förder- oder Räumelementes und Durchführungsöffnungen für Befestigungselemente dieses Haltebockes aufweisen, so daß derartige Elemente problemlos an bestehenden Kettengliedern angebracht werden können und keine Auftrennung der Kette für die Montage dieser Elemente notwendig wird.

Dadurch, daß wenigstens ein Teil der Kettenräder eine ungerade Anzahl von Zähnen bzw. Zahngruppen aufweist, die in der halben durch die Kettengliedlänge gegebenen Teilung aufeinanderfolgend angebracht sind, wird erreicht, daß die Zähne nur bei jedem zweiten Umlauf mit der Buchse bzw. den Mitnehmern in Eingriff kommen, so daß der Verschleiß der Kettenräder weiter verringert wird. Ferner ist es bei dieser Ausführung möglich, die Anordnung so zu treffen, daß die zwischen den in Eingriff mit Buchse und Mitnehmern stehenden Zahngruppen befindliche Zahngruppe die Stege der Kettenglieder in deren Mittelbereich zusätzlich führt.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigen
- Fig. 1: schematisch ein Abwasserklärbecken mit einem Kettenräumer,
- Fig. 2: ein Teilstück der Kette in Draufsicht, wobei ein vollständiges Kettenglied und die beiden anschließenden Kettenglieder eingezeichnet wurden,
- Fig. 3: ein Kettenglied in Seitenansicht,
- Fig. 4: ein Teilstück eines Kettenrades mit der auf ihm geführten Kette in Seitenansicht,
- Fig. 5: als Detail einen Zahnbauteil in Seitenansicht,
- Fig. 6: einen Schnitt nach der Linie VI-VI der Fig. 5,
- Fig. 7: einen Haltebock für einen Räumer in Draufsicht und
- Fig. 8: diesen Haltebock in Seitenansicht.

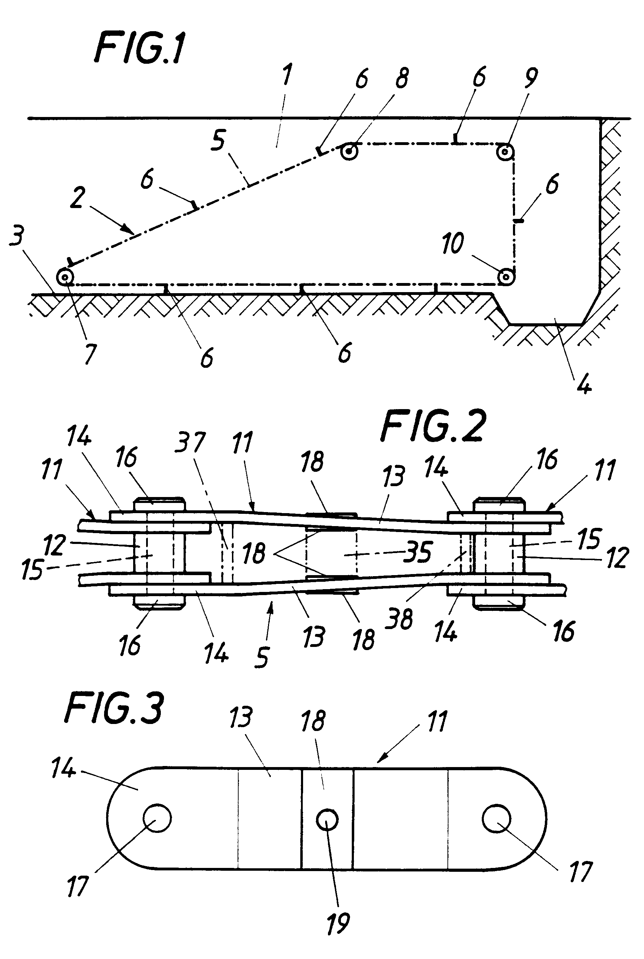

Für ein Klärbecken 1 ist gemäß Fig. 1 ein Kettenräumer 2 vorgesehen, der die sich am Boden 3 des Beckens absetzenden Feststoffe in eine Rinne 4 fördern soll, aus der diese Feststoffe über nicht dargestellte Einrichtungen entnommen werden können. Der Kettenräumer besteht aus zwei parallel angeordneten endlosen großgliedrigen Ketten 5, die abstandsweise Räumelemente 6 tragen und die über mehrere Kettenräder 7, 8, 9, 10 geführt sind, von denen wenigstens eines, z. B. das Kettenrad 10 angetrieben wird. Für die zweite Kette sind entsprechende Kettenräder vorhanden, wobei zumindest die angetriebenen Kettenräder untereinander über Wellen verbunden sein können.

Nach den Fig. 2 und 3 besteht jede Kette 5 aus untereinander gleichen Kettengliedern 11, die eine gabelartige Grundform aufweisen, wobei eine Buchse 12 die beiden Kettenstege 13 an dem einen Ende zur Gabel verbindet. Beim Ausführungsbeispiel verlaufen die beiden Kettenstege im Bereich beider Enden parallel zur Kettenlängsrichtung und sind durch ein schräges Mittelstück verbunden. Die freien Enden 14 der Kettenstege 13 umschließen das nächstfolgende Kettenglied und sind mit diesem über einen durch die Kettenbuchse 12 geführten Kettenbolzen 15 verbunden. Auf den herausgeführten Enden des Kettenbolzens 15 sind die gleichen Durchmesser wie die Buchse 12 aufweisende Mitnehmer 16 angebracht, die entweder mit dem Kettenbolzen 15 starr verbunden und gemeinsam mit diesem in der Öffnung der Buchse 15 und den entsprechenden Öffnungen 17 der Stege drehbar sind oder selbst auf dem Kettenbolzen 5 drehbar gelagerte Walzen bilden können. Im Mittelbereich der Stege 13 sind noch wieder in Kettenlängsrichtung verlaufende Flächen bildende Führungselemente 18 und Montageöffnungen 19 ausgeformt.

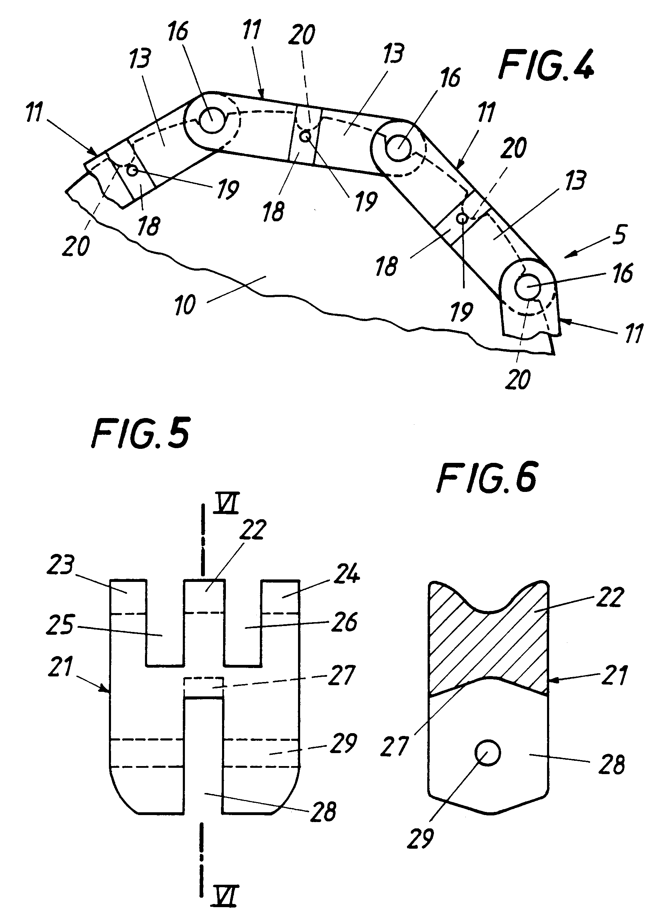

Die Kettenräder 7 bis 10 können entweder, wie dies in Fig. 4 für ein Kettenrad 10 veranschaulicht wurde, im Eingriffsbereich der Kette 5 drei gleiche Zahnreihen aufweisen, die durch Spalte zur Durchführung der Stege 13 der Kettenglieder getrennt sind, wobei in Fig. 4 nur die Zähne 20 der äußeren Zahnreihe gezeigt wurden, oder nach den Fig 5 und 6 aus nicht dargestellten Scheiben bestehen, auf die Bauteile 21 aufgesetzt sind, die je einen Mittelzahn 22 für den Eingriff mit den Buchsen 12 und Außenzähne 23, 24 für den Eingriff mit den Teilen 16 besitzen. Zwischen den Zähnen 22, 23 und 22, 24 sind Spalte 25, 26 zur Durchführung der Kettenstege 13 vorgesehen. Die nicht dargestellte Trägerscheibe besitzt im Anbringungsbereich der Bauteile 21 eine von der Kreisform abweichende Form, die zu Gegenhalteflächen 27 am Nutgrund einer unterseitigen Nut 28 der Bauteile 21 paßt, so daß die mit durch Löcher 29 einführbaren Nieten oder Schrauben befestigten Bauteile 21 formschlüssig an der Scheibe gehalten werden. Die Bodenteile der Durchtrittsspalte 25, 26 können etwa die gegengleiche Form wie die Flächen 27 aufweisen und so Abwälz- und Leitflächen für die Stege 13 der Kettenglieder bilden.

Nach Fig. 4 ist das Kettenrad 10 mit einer ungeraden Anzahl von Zähnen 20 versehen, die in der halben durch die Eingriffslänge eines Kettengliedes 11 bestimmten Teilung vorgesehen sind.

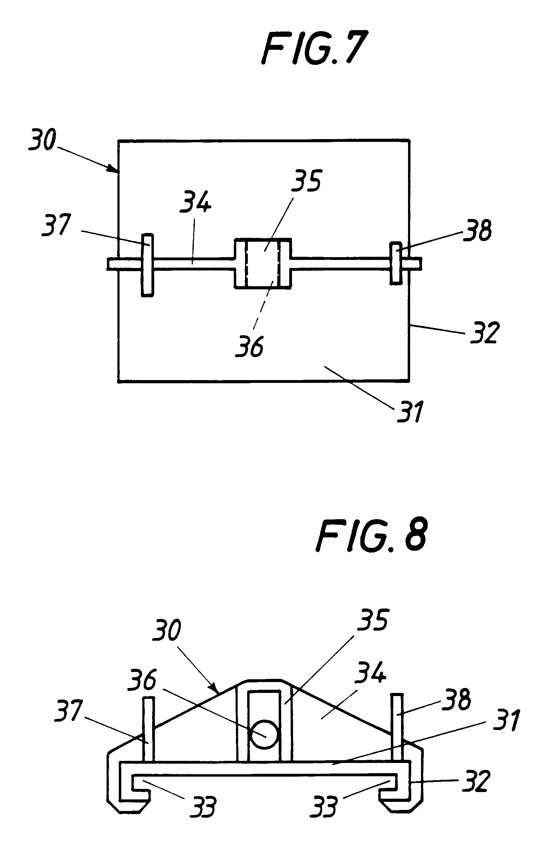

In den Fig. 7 und 8 ist ein an einem Kettenglied 11 befestigbarer Haltebock 30 für einen Räumer 6 veranschaulicht. Dieser Haltebock bildet eine Tragplatte 31, an deren Querrändern (bezogen auf die Kettenlängsrichtung) 32 Haltenuten 33 für die Einführung einer oberen Tragplatte eines Räumers 6 vorgesehen sind. An der Oberseite der Platte 31 ist ein Mittelsteg 34 vorhanden, mit dem der Haltebock zwischen die beiden Stege 13 einer Kette eingeschoben werden kann. Dieser Mittelsteg 34 trägt in seiner Längsmitte ein Führungsstück 35, das mit Gegenflächen für die nach innen gerichteten Flächen 18 der Kettenstege versehen ist und eine zur Öffnung 19 passende Montageöffnung 36 aufweist. An den äußeren Plattenenden sind ferner den Mittelsteg kreuzende Querstege 37, 38 ausgeformt, deren Lage zur Kette in Fig. 2 strichpunktiert angedeutet wurde.

## Patentansprüche

1. Kettenförderer oder -räumer, insbesondere für Abwasseranlagen, mit wenigstens einer großgliedrigen Kette (5) die über Kettenräder (7, 8, 9, 10) geführt ist, von denen wenigstens eines (10) antreibbar ist, wobei die Kettenglieder (11) und die mit ihnen in Eingriff kommenden Teile (20, 21) der Kettenräder (7, 8, 9, 10) als Kunststoffteile ausgebildet sind, die untereinander gleichen Kettenglieder (11) gabelartige Grundform aufweisen, mit einer die Kettenstege (13) an der Basis verbindenden Buchse (12) zwischen die Stegenden des nächstfolgenden Gliedes (11) eingreifen und mit diesem über durch die Buchse (12) und die Stegenden durchsetzende Kettenbolzen (15) verbunden sind, wobei in die Kette integrierbare Förder- oder Räumelemente (6) vorgesehen sind, und die Kettenräder (10) für den Eingriff mit den Buchsen (12) bestimmte Zähne (22) aufweisen, dadurch gekennzeichnet, daß die Kettenräder (10) zusätzlich zu den für den Eingriff mit den Buchsen (12) bestimmten Mittelzähnen (22) beidseits weitere, an den Stegaußenseiten der Ketten (5) angeordnete Außenzähne (23, 24) für den Eingriff mit herausgeführten Kettenbolzenenden oder an diesen angebrachten Mitnehmern (16) aufweisen, wobei die Kettenglieder (11) sich beim Durchlauf mit ihren Stegen (13) zwangsweise in den zwischen Mittelzähnen (22) und Außenzähnen (23, 24) gebildeten Durchtrittsspalten (25, 26) oder Schlitzen ausrichten.

2. Kettenförderer oder -räumer nach Anspruch 1, dadurch gekennzeichnet, daß in den zwischen den Außenzähnen (23, 24) und den Mittelzähnen (22) vorgesehenen Durchtrittsspalten (25, 26) für die Kettenstege (13) am Spaltgrund Abwälz- und Leitflächen für die Ränder der Stege (13) der Kettenglieder (11) vorgesehen sind.

3. Kettenförderer oder -räumer nach Anspruch 1 oder 2, dadurch gekennzeichnet, daß die auf den Kettenbolzen (15) angebrachten Mitnehmer (16) mit den Kettenbolzen in den Buchsen (12) drehbar lagern.

4. Kettenförderer oder -räumer nach Anspruch 1 oder 2, dadurch gekennzeichnet, daß die auf den Kettenbolzen (15) angebrachten Mitnehmer (16) als auf den Kettenbolzen drehbare Walzen ausgebildet sind.

5. Kettenförderer oder -räumer nach einem der Ansprüche 1 bis 4, dadurch gekennzeichnet, daß die Zähne (22 - 24) des Kettenrades als gesonderte, auf einer Trägerscheibe befestigte Bauteile (21) ausgebildet sind.

6. Kettenförderer oder -räumer nach Anspruch 5, dadurch gekennzeichnet, daß jeder Bauteil (21) einen Mittelzahn (22), die zugeordneten Außenzähne (23, 24) mit den Durchtrittsspalten (25, 26) für die Kettenstege (13, 14) und an der von den Zähnen (22, 23, 24) abweisenden Seite eine Aufnahmenut (28) für den Rand der Trägerscheibe aufweist.

7. Kettenförderer oder -räumer nach den Ansprüchen 5 und 6, dadurch gekennzeichnet, daß die Trägerscheibe im Anbringungsbereich der die Zähne (22, 23, 24) aufweisenden Bauteile (21) eine von der Kreisform abweichende Umrißform zur Bildung von Abstützflächen für diese Bauteile (21) und den Nutgrund (27) der Aufnahmenut (28) aufweist.

8. Kettenförderer oder -räumer nach einem der Ansprüche 1 bis 7, dadurch gekennzeichnet, daß wenigstens ein Teil der Kettenglieder (11) im Längsmittelbereich der Kettenstege (13) Führungs- und Stützflächen (18) für die Anbringung eines Haltebockes (30) eines Förder- oder Räumelementes (6) und Durchführungsöffnungen (36) für Befestigungselemente dieses Haltebockes aufweist.

9. Kettenförderer oder -räumer nach einem der Ansprüche 1 bis 8, dadurch gekennzeichnet, daß wenigstens ein Teil der Kettenräder (7 - 10) eine ungerade Anzahl von Zähnen (20) bzw. Zahngruppen aus Außen- oder Mittelzähnen (22, 23, 24) aufweist, die in der halben durch die Kettengliedlänge gegebenen Teilung aufeinanderfolgend angebracht sind.

## Claims

1. A chain conveyor or scraper, more particularly for sewage installations, comprising at least one large-link chain (5) guided over chain wheels (7, 8, 9, 10) at least one (10) of which is drivable, the links (11) and the parts (20, 21) of the chain wheels (7, 8, 9, 10) in engagement therewith being plastics parts, the links (11), which are similar to one another, having a fork shape and a bush (12) at the base connects the arms (13) of the forks and engages between the ends of the arms of the next link (11) and is connected therewith via link bolts (15) extending through the bush (12) and the arm ends, conveying or scraping elements (6) being incorporated in the chain and the chain wheels (10) having teeth (22) designed for engagement with the bushes (12), characterised in that in addition to the central teeth (22) for engagement with the bushes (12), the chain wheels (10) have other, outer teeth (23, 24) disposed on the outsides of the arms of the chains (5) for engagement with projecting link-bolt ends or cams (16) mounted thereon, the arms (13) of the links (11) being automatically aligned in transit in the passage gaps (25, 26) or slots formed between the central teeth (22) and the outer teeth (23, 24).

2. A chain conveyor or scraper according to claim 1, characterised in that rolling and guiding surfaces for the edges of the arms (13) of the links (11) are provided at the base of the passage gaps (25, 26) for the arms (13) disposed between the outer teeth (23, 24) and the central teeth (22).

3. A chain conveyor or scraper according to claim 1 or 2, characterised in that the cams (16) disposed on the link bolts (15) are mounted for rotation with the link bolts in the bushes (12).

4. A chain conveyor or scraper according to claim 1 or 2, characterised in that the cams (16) disposed on the link bolts (15) are in the form of rollers rotatable on the link bolts.

5. A chain conveyor or scraper according to any of claims 1 to 4, characterised in that the teeth (22 - 24) of the chain wheel are separate components (21) secured to a supporting disc.

6. A chain conveyor or scraper according to claim 5, characterised in that each component (21) comprises a central tooth (22), associated outer teeth (23, 24) with passage gaps (25, 26) for the link arms (13, 14), and a groove (28) for receiving the edge of the bearing disc on the side remote from the teeth (22, 23, 24).

7. A chain conveyor or scraper according to claims 5 and 6, characterised in that in the place where the components (21) having teeth (22, 23, 24) are attached, the bearing disc has a non-circular contour so as to form supporting surfaces for these components (21) and for forming the base (27) of the receiving groove (28).

8. A chain conveyor or scraper according to any of claims 1 to 7, characterised in that at least some of the links (11) in the longitudinal central region of the arms (13) have guide and supporting surfaces (18) for attaching a block (30) for retaining a conveying or scraping element (6), and also have openings or passages (36) for elements securing the retaining block.

9. A chain conveyor or scraper according to any of claims 1 to 8, characterised in that at least some of the chain wheels (7 - 10) have an odd number of teeth (20) or groups of outer or central teeth (22, 23, 24), disposed in succession at half the pitch determined by the length of the links.

## Revendications

1. Convoyeur ou racleur à chaîne, notamment pour installation d'eaux usées, avec au moins une chaîne (5) à gros maillons, guidée, par l'intermédiaire de roues à chaîne (7, 8, 9, 10), dont au moins l'une (10) est susceptible d'être entraînée, les maillons (11) et les parties (20, 21), venant en contact avec eux, des roues à chaîne (7, 8, 9, 10) étant réalisées sous forme de pièces en matière synthétique, les maillons (11), qui entre eux sont identiques, présentant une forme de base fourchue, en s'engageant, par une douille (12) reliant à la base les nervures de chaîne (13), entre les extrémités de nervure du maillon (11) suivant et étant reliés à ce maillon suivant par l'intermédiaire de boulons à chaîne (15) traversant la douille (12) et les extrémités de nervure, des éléments de convoyeur ou de racleur (6) intégrables dans la chaîne étant prévus et les roues à chaîne (10) présentant des roues (22), conçues pour l'engagement avec les douilles (12), caractérisé en ce que, les roues à chaînes (10) présentent en plus des dents médianes (22) conçues pour l'engagement avec les douilles (12), de part et d'autre, d'autres dents extérieures (23, 24) disposées sur les faces extérieures de nervures des chaînes (5), pour l'engagement avec des extrémités de boulons à chaîne faisant saillie ou bien présentant des organes d'entraînement (16) montés sur ces extrémités de boulons à chaîne, les maillons (11), lors du passage par leurs nervures (13) s'orientant obligatoirement dans les interstices de passage (25, 26) ou fentes constitués entre les dents médianes (22) et les dents extérieures (23, 24). .

2. Convoyeur ou racleur à chaîne selon la revendication 1, caractérisé en ce que, dans les interstices de passage (25, 26) prévus entre les dents extérieures (23, 24) et les dents médianes (22), sont prévus pour les nervures de chaînes (13), sur le fond d'interstice, des surfaces de roulement et de guidage pour les bords des nervures (13) des maillons (11).

3. Convoyeur ou racleur à chaîne selon la revendication 1 ou 2, caractérisé en ce que les organes d'entraînement (16) montés sur les boulons à chaîne (15) servent de paliers de tourillonnement avec les boulons à chaîne, dans les douilles (12).

4. Convoyeur ou racleur à chaîne selon la revendication 1 ou 2, caractérisé en ce que les organes d'entraînement montés sur les boulons à chaîne (15) sont réalisés sous forme de rouleaux susceptibles de tourner sur les boulons à chaîne.

5. Convoyeur ou racleur à chaîne selon l'une des revendications 1 à 4, caractérisé en ce que les dents (22 à 24) de la roue à chaîne sont réalisées sous forme d'éléments de construction (21) séparés, fixés sur un disque-support.

6. Convoyeur ou racleur à chaîne selon la revendication 1 ou 2, caractérisé en ce que chaque élément de construction (21) présente une dent médiane (22), les dents extérieures (23, 24) associées avec les interstices de passage (25, 26) destinés aux nervures à chaîne (13, 14) et, sur le côté opposé aux dents (22, 23, 24), une rainure de réception (28) destinée au bord du disque-support.

7. Convoyeur ou racleur à chaîne selon les revendications 5 et 6, caractérisé en ce que le disque-support présente, dans la zone de montage des éléments de construction présentant les dents (22, 23, 24), une forme de contour différente de la forme circulaire, pour former des surfaces d'appui pour ces éléments de construction (21) et le fond de rainure (27) de la rainure de réception (28).

8. Convoyeur ou racleur à chaîne selon l'une des revendications 1 à 7, caractérisé en ce qu'au moins une partie des maillons (11) présente dans la zone médiane longitudinale des nervures à chaîne (13), des surfaces de guidage et d'appui (18) destinées au montage d'un bloc de maintien (30) d'un élément de convoyeur ou de racleur (6) et des ouvertures de passage (36) destinées aux éléments de fixation de ce bloc de maintien.

9. Convoyeur ou racleur à chaîne selon l'une des revendications 1 à 8, caractérisé en ce qu'au moins une partie des roues à chaîne (7 à 10) présentent un nombre impair de dents (20) ou de groupes de dents constitués de dents extérieures ou de dents médianes (22, 23, 24), ces dents étant montées les unes à la suite des autres, dans la demi-division produite par la longueur des maillons.
